# EUROPEAN PATENT APPLICATION

(11) **EP 2 785 120 A1**
(43) Date of publication of application: **01.10.2014**
(21) Application number: 13305403.1
(22) Date of filing: 28.03.2013
(51) Int. Cl.: H04W 52/36, H04W 52/38, H04W 52/50, H04L 29/06, H04W 52/28

(54) **Method and system for establishing a wireless telecommunications network**

(71) Applicant: NEC Corporation, Minato-ku, Tokyo 108-8001 (JP)
(72) Inventor: Zappulla, Fabrice, 95600 EAUBONNE (FR)
(74) Representative: Cabinet Plasseraud

(57) **Abstract**

A method of providing wireless communication access to a first device, the method comprising: determining a limited transmission power level for the first device on the basis of a desired range limit for wireless communications, configuring the first device to broadcast wireless information at the limited power level, and broadcasting, from the first device, connection information for establishing wireless communications with the first device.

## Description

The present invention relates to wireless telecommunication networks, and more particularly to establishing such telecommunication networks. More particularly still, the present invention relates to a method that enables a plurality of devices capable of wireless communications to establish a secure wireless network without any pre-existing infrastructure or information exchange between the devices. The invention also relates to devices capable of performing the methods described.

Wireless networking is commonly used to exchange information between computers, or to connect a computer to the internet. Typically, wireless networks using the well-known IEEE 802.11 set of standards are established in the form of a so-called "infrastructure" network. In such networks, all communications are routed via an "access point". Thus, if two devices on the network wish to exchange information, then the information is passed from a first device to the access point and subsequently from the access point to the second device. Alternatively, networks can be established on a peer-to-peer basis and, in the 802.11 standards, this is known as an "ad-hoc network". In an ad-hoc network, one device in the network assumes the role of the access point and manages communications with the other devices in the network. Thus, data can be exchanged directly between two devices that are in the same ad hoc network.

To provide secure communications in either an infrastructure or ad-hoc network, transmitted data can be encrypted. In such networks, under the 802.11 standards, it is generally necessary for a device to know the network name and an associated password in order to establish communications. The password acts to both enable the device to connect to the network, and also to encrypt and decrypt the transmitted data. Thus, prior to creating, or connecting to, a secure network, information in the form of a password must be exchanged such that both the access point and a device wishing to connect to the network can encrypt and decrypt transmitted information.

In a home or office environment, such an exchange of information poses little problem. For example, the network name and password for connection to a home router can be displayed directly on the router. A user can type the password into a device to allow it to connect to the router. Secure connection is then ensured by virtue of the fact that it is unlikely that an undesired user would be able to view the password.

However, in a situation where two or more users wish to exchange information in a secure manner whilst they are in a location where an undesired user may be able to eavesdrop, such as a public location, there exists a problem in that exchange of the password may not be secure. For example, if the user of a first device were to say the password to the user of a second device then they could be overheard. Moreover, to ensure a reasonable level of security, the password may have to be of considerable length and, as a result, there is a likelihood that an error may be made when a user inputs it into their device.

Further, the exchange of passwords and other connection information whilst setting up a network can take considerable time. Thus, if the purpose of establishing the network is to exchange only a small amount of information, then this can mean that the exchange is inefficient.

In a first aspect, the present invention provides a method of providing wireless communication access to a first device. The method comprises determining a limited transmission power level for the first device on the basis of a desired range limit for wireless communications, configuring the first device to broadcast wireless information at the limited power level, and broadcasting, from the first device, connection information for establishing wireless communications with the first device.

Thus, the method provides a means of establishing wireless communications between the first device and another device wherein an eavesdropper located outside of the range limit is unable to receive the connection information and is therefore unable to connect with the first device. As a result, the eavesdropper is unable to intercept communications from the first device.

Advantageously, the method can further comprise configuring the first device to broadcast at a second transmission power level, higher than the limited transmission power level, after broadcast of the connection information is complete. Thus, once the information required to connect to the first device has been broadcast, the first device can revert to a normal, higher, transmission power level to provide reliable communications. However, since the connection information was only broadcast at the limited transmission power level, an eavesdropper located outside of the range limit will be unable to connect to the first device.

Advantageously, the limited power level is an average power level, wherein a modulation to the transmission power level is applied whilst broadcasting the connection information to thereby provide means of identifying the first device to a second device. Thus, the method provides a method of identifying the first device from among all other devices that are broadcasting within range of wireless communications.

Advantageously, the applied modulation takes the form of a sinusoidal, triangular, square-wave or saw-tooth function. Thus, since a regular modulation pattern is used, devices wishing to connect to the first device do not need to receive the complete transmissions from the first device. Rather, it is sufficient to detect the presence of one or more cycles of the modulation function, and one instance of the connection information.

Alternatively or additionally, the first device can, during broadcast of the connection information, apply at least one of; a change to its service set identifier, SSID, broadcast specific information within a beacon message, a change to its broadcast channel in a predetermined pattern, to thereby provide means of identifying the first device to another device from among all devices that are broadcasting within range. This process is known as "Frequency Hopping".

Advantageously, the connection information comprises information indicating a password for encrypted communications with the first device. Thus, secure communications can be established between the first device and another device by using the password information. An eavesdropper outside of the range limit will not receive the password information, and so can be excluded from the subsequent encrypted communications between the first device and the other device.

Advantageously, the establishment of the wireless communications can be initiated via a user input to the first device. Thus, for example, a user can select a mode on the first device to initiate the establishment of wireless communications when the first device is in proximity to another device with which the user wishers to connect.

Advantageously, the user input comprises information corresponding to a password for establishing encrypted wireless communications with the first device. Thus, for example, the user of the first device can input a password and convey this password to the user of a second device with which he wishes to connect. The second device will then only be able to establish communications with the first device if the same password is input to the second device.

Advantageously, the establishment of the communications with the first device can be made to be conditional such that a device wishing to connect must use both the password information from the user input and also the password information from the connection information to the first device. Thus, the method can provide a more secure means of communication than would be achieved using only a single password.

Advantageously, the information corresponding to a password can comprise one or more of: a text string, a speech input, a gesture input via a touch screen or camera, a rotation to the first device, or an orientation of the first device. Thus, for example, the information corresponding to a password can be a simple gesture which the user of a device that wishes to connect to the first device must replicate in order to connect to the first device.

In a second aspect, the invention provides a device for communicating wirelessly with another device. The device comprising a wireless communications module configured to: determine a limited transmission power level for the first device on the basis of a desired range limit for wireless communications, configure the first device to broadcast wireless information at the limited power level, and broadcast, from the first device, connection information for establishing wireless communications with the first device.

In further aspects, the invention provides a computer program product comprising computer readable instructions which, when run on a computer system, cause the computer system to perform any of the described methods, and a computer readable medium comprising such a computer program product.

The accompanying Figures, which are included to provide a further understanding of the invention and are incorporated in and constitute a part of this specification, illustrate exemplary embodiments of the invention, and together with the description serve to explain the principles of the invention.
Figure 1 illustrates a scenario according to an embodiment of the invention in which a first device wishes to establish communications with a second device whilst excluding a third device from eavesdropping on these communications;
Figure 2 illustrates a further scenario according to an embodiment in which a second device wishing to connect to a first device must distinguish the transmissions of this device from other transmitting devices;
Figure 3 illustrates a modulation function that is applied to a transmission power level in an embodiment;
Figure 4 illustrates further details of the modulation function applied in Figure 3; and
Figure 5 illustrates a flow chart for implementation of an exemplary embodiment.

The invention is described more fully hereinafter with reference to the accompanying Figures, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. Further, it is explicitly envisaged that the embodiments described will, in certain instances, be combined.

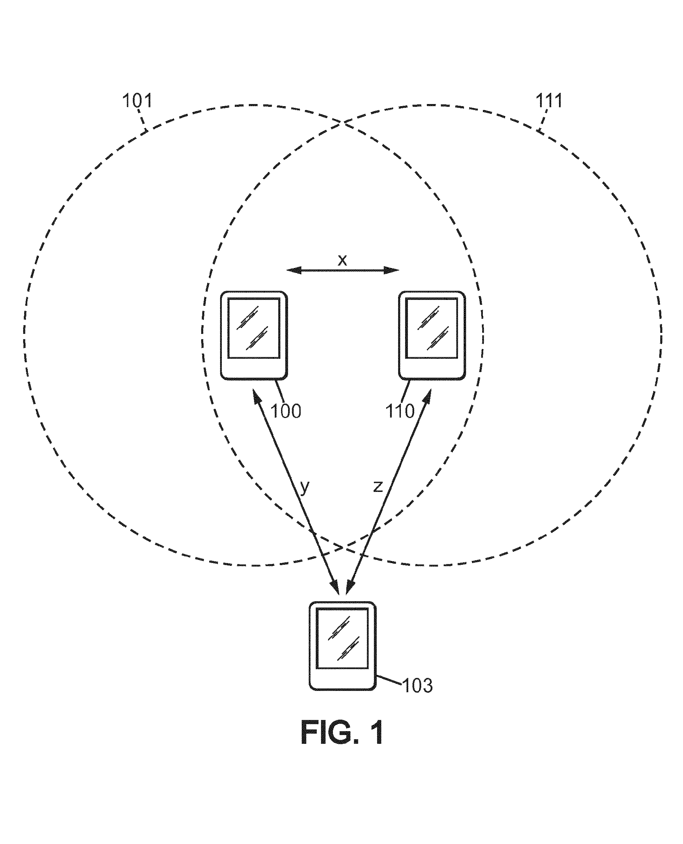

Figure 1 illustrates a scenario according to a first embodiment, in which a first device 100 and a second device 110 wish to exchange information via wireless communications.

The term "device" as used herein is defined to include any device that is capable of communicating wirelessly with another device or network. Such devices include, but are not limited to mobile (cellular) telephones, internet phones, smart phones, laptop or tablet computers, smart watches, portable hard drives and digital cameras. Typically, such devices will include a screen to display information, a memory to store information, a processor to control the device, a wireless communications unit and a means to input information, such as a keypad. The means to input information can comprise a touch screen. However, equally, the devices need not comprise a display and exchanges of information between two devices without displays are possible in the described embodiments.

In the scenario of Figure 1, it is assumed that the two devices 100, 110 wish to prevent another, third, device 103 from eavesdropping on the exchange of information. As illustrated in Figure 1, the second device 110 is located at a distance x from the first device 100, while the third device 103 is located at distances of y and z from the first and second devices respectively. In this example, the distance x is smaller than either of y or z.

In all of the described embodiments, it is assumed that the wireless communications will be established using one of the IEEE 802.11 set of standards. However, it should be noted that the present invention is not limited to any such a standard. Rather, the invention is equally applicable to many other types of wireless communications, including but not limited to Bluetooth, ZigBee, WiFi Direct, optical/infrared communications and near-field communications, NFC.

To ensure that the second device 110 can receive communications transmitted by the first device 100, the first device transmits information at a transmission power level that is sufficient to allow reception of the transmitted signal by the second device 110. However, to prevent reception of the transmitted information by the unwanted third device 103, the transmission power is limited to a level below which the third device 103 can reliably receive the information. This is possible since the third device 103 is located at a greater distance from the first device 100 than the second device 110.

As will be appreciated by one skilled in the art, the received signal level at a receiving device will in general be lower if the distance between the receiving device and the device transmitting the signal is greater (for a given, fixed, transmission power level). The skilled person will also recognise that the required transmission power level to enable communications at a given range between devices can be determined either experimentally, or by calculation. Information related to this required power level can be stored in either or both of the first 100 and second 110 devices.

To achieve the greatest reliability in transmissions between the first 100 and second 110 devices, the transmission power level can be selected to be the maximum power that excludes the third device 103 from reliable reception of the transmissions from the first device 100. The skilled person will recognise that, in general, the transmission power level required to achieve reliable communications is a function of many factors, such as range, the presence of other transmitting devices, the local environment, the presence of noise/interference, the particular transmitting and/or receiving apparatus and so forth. The skilled person will also recognise that the inherent variability in such factors will mean that the required power level will vary over time. Thus, the definition of "reliable" used herein should be taken to mean that the transmission power level is chosen to achieve communications when taking such factors into account.

The skilled person will understand methods of determining suitable transmission power levels, such as by measuring or estimating the path loss between a transmitter and receiver. Accordingly, a full explanation will not be included here.

To control the transmission power level of the first device 100, a user of the first device 100 sets the transmission power level of the first device 100 to be restricted so as to limit communications to the particular range limit desired. This can, for example, be achieved by selection of a particular mode on the device, in other words a "short-range mode". Upon selection of this mode, the transmission power level of the first device will be set to a predetermined level to thereby limit the effective range of transmission from the first device to the desired range. As a result, the user of the first device can ensure that only devices within the desired range limit can receive transmissions from the first device 100.

To then establish communications between the first device 100 and the second device 110, one device, in this example the first device 100, assumes the role of the access point and manages communications with the other device, in this example the second device 110. Thus, data can be exchanged directly between the two devices by the creation of an ad hoc network in a known manner. The skilled person will understand the processes involved in setting up such an ad-hoc network and so further details will not be repeated here.

In an alternative embodiment, the user of the first device 100 selects a desired range limit for short-range communications. This is achieved by providing a look-up table (LUT) in a memory of the first device 100 which comprises a table of the required transmission power level for various approximate ranges. Thus, for example, the user of the first device 100 can estimate the range of a second device 110, with which communications are desired, and select this as the range limit for communications.

In a further alternative embodiment, the first device 100 operates, by default, in a mode corresponding to the above-described "short-range mode". Accordingly, in this embodiment, there is no requirement for the user of the first device 100 to select such a mode.

In a further embodiment, the second device 110 also controls the transmission power level in a similar manner to the first device 100. In such an embodiment, since both the first 100 and the second 110 devices have limited their transmission power levels, the third device 103 is unable to eavesdrop on transmission from either the first device 100 or the second device 110.

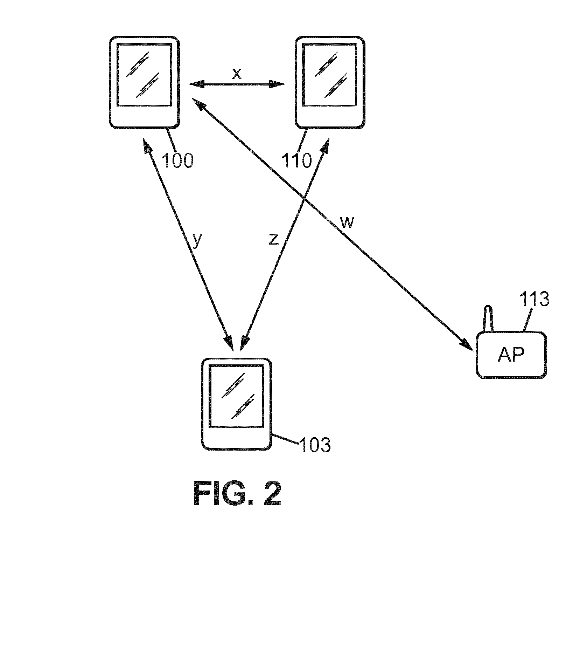

In a situation where several devices are within communication distance of one another, it can be difficult to identify the particular device to which another device wishes to connect. Figure 2 illustrates such a scenario. In Figure 2 a first device 100 and a second device 110 wish to set up an ad-hoc network. For this purpose, the first device 100 will act as the access point.

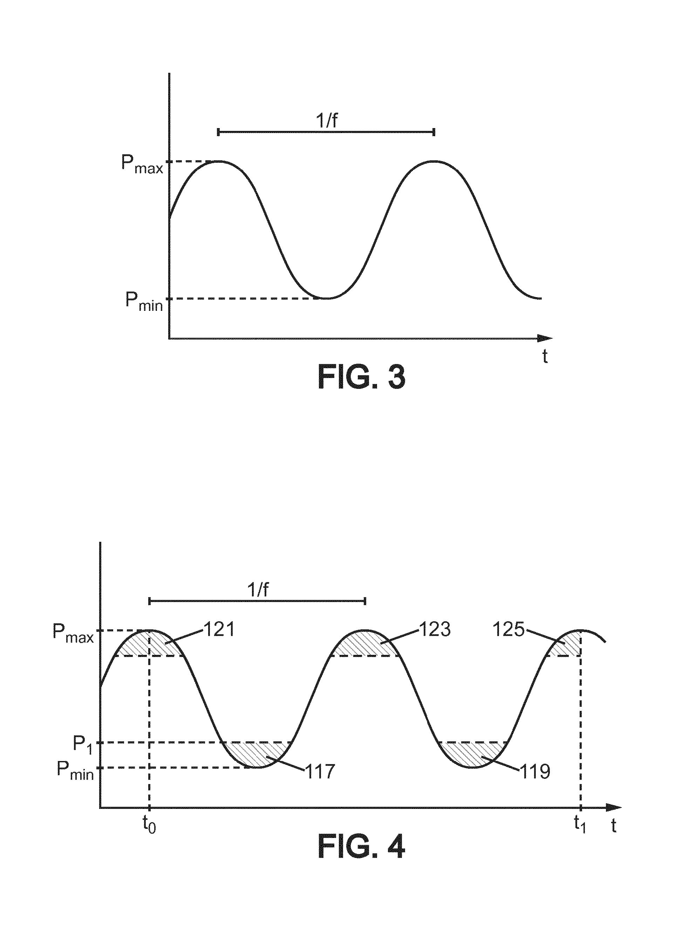

As in the embodiments discussed above, the second device 110 is located at a relatively small distance, x, from the first device 100, but at a larger distance, y from a third device 103. In addition, illustrated in figure 3, a fixed access point 113 is also present, but is again further from the first device 100 than the second device 110 at a distance w. As discussed in the above complementary embodiments, the first device 100 uses a limited transmission power level in order to exclude devices other than the second device 110 from establishing communications. However, the third device 103 and the fixed access point 113 will, in general, be broadcasting at arbitrary transmission power levels. Thus, there exists the possibility that the second device 110 has some ambiguity as to the identity of the device with which it would like to connect, i.e. the first device 100. This is because the second device 110 may simultaneously receive transmissions from either or both of the third device 103 and the fixed access point 113.

Moreover, it may be the case that this ambiguity cannot be resolved merely by examining the received power level from the various devices. For example, it could by chance be the case that the received power level from the third device 103 was equal to the received power level from the first device 100. This could be the case if the third device 103 was broadcasting at a high transmission power level than the first device 100 but, as in Figure 2, was located further from the second device 110 than the first device 100.

Thus, to resolve this problem, and to help rapidly establish the ad-hoc network, in complementary embodiments, the first device additionally signals its availability for the purposes of setting up an ad-hoc network.

The skilled person will recognise that, under the IEEE 802.11 set of standards, an access point usually broadcasts a "network name" by which it can be identified. This is known as the Service set identification (SSID). Normally, this comprises a text string. The SSID can be chosen by the access point when setting up the network. Accordingly, a particular device can be selected by searching for a given SSID.

However, if information has not previously been exchanged between the first device 100 and the second device 110, then the second device may not be aware of the SSID of the first device 100. Accordingly, in an embodiment, the first device 100 changes its SSID to a pre-agreed name or name format. Thus, in the present embodiment, the first device 100 changes its SSID to "APP_1_SECURITY_3". In the presently describe embodiment, it is assumed that this SSID is known to the second device 110 as representing a standard SSID for the purpose of establishing an ad-hoc network. Thus, the second device 110 can recognise the transmissions of the first device 100 from among all of the other devices 103, 113 that happen to be broadcasting in the vicinity of the second device 110. The skilled person will recognise that information other than identification can also be conveyed by changing the SSID in this manner. For example, the identity of a user of the first device, or the status of the first device could alternatively or additionally be conveyed.

In an alternative embodiment, rather than altering its SSID, the first device 100 inserts information within the beacon message. The information inserted within the beacon message serves to identify the first device 100 in the same manner as the altered SSID in the previously described embodiment. In the presently describe embodiment, it is assumed that the information inserted within the beacon message is known to the second device 110 as representing a standard beacon message for the purpose of establishing an ad-hoc network. Thus, the second device 110 can recognise the transmissions of the first device 100 from among all of the other devices 103, 113 that happen to be broadcasting in the vicinity of the second device 110. The skilled person will recognise that information other than identification can also be conveyed by insertion into the beacon message in this manner. For example, the identity of a user of the first device, or the status of the first device could alternatively or additionally be conveyed.

In a further alternative embodiment, the first device 100 identifies itself to the second device 110 by altering the channel on which it broadcasts in a predetermined pattern. Thus, in the presently describe embodiment, it is assumed that the pattern of channel switching is known to the second device 110 as representing a standard pattern for the purpose of establishing an ad-hoc network. Thus, the second device 110 can recognise the transmissions of the first device 100 from among all of the other devices 103, 113 that happen to be broadcasting in the vicinity of the second device 110.

To enable the second device 110 to be able to detect the pattern of channel switching, the skilled person will recognise that the second device must have a receiving bandwidth that is large enough to simultaneously include all of the channels used for broadcast by the first device.

For example, in a broadcast system in which 13 channels are used, labelled Ch1 to Ch13, the first channel, Ch 1 and the last channel Ch13 can be used to indicate a start or end of a sequence. The remaining channels can be used to convey the information required for identification of the first device 100. Thus, for example, the first device 100 could broadcast on the following sequence of channels Ch1, Ch 1, Ch5, Ch13, Ch13 to indicate that it is available for setting up an ad-hoc network.

Since Ch1 and Ch13 are used to indicate the start and end of the sequence, the "sequence" here is Ch5, and broadcast on this channel indicates to the second device 110 that the first device is available for ad-hoc networking. The skilled person will recognise that more complex sequences are possible to enable a more certain identification of the first device 100 by the second device 110. The skilled person will also recognise that information other than identification can also be conveyed by changing the broadcast channel in this manner. For example, the identity of a user of the first device, or the status of the first device could alternatively or additionally be conveyed.

In a further alternative embodiment, the first device 100 identifies itself to the second device 110 by modulating the transmission power level. Thus, in the presently describe embodiment, it is assumed that the form of the modulation applied to the transmission power level is known to the second device 110 as representing a standard modulation for the purpose of establishing an ad-hoc network. Thus, the second device 110 can recognise the transmissions of the first device 100 from among all of the other devices 103, 113 that happen to be broadcasting in the vicinity of the second device 110.

Figure 3 illustrates an example of a modulation signal that can be applied to the transmission power level of the first device 100 for the purposes of this embodiment. As illustrated in Figure 3, the transmission power level is modulated in a sinusoidal pattern at a frequency, f, between maximum and minimum power levels, Pₘₐₓ and Pₘᵢₙ respectively. In this embodiment, the maximum transmission power level, Pₘₐₓ, is selected to be equal to the transmission power level as discussed above in relation to the first embodiment. Thus, a third device 103 located as discussed in relation to the first embodiment will be unable to detect the presence of the first device 100 since even the maximum power level, Pₘₐₓ, is too low for the third device 103 to detect the transmission.

The minimum power level Pₘᵢₙ is selected to be the minimum power at which the second device 110 (and any other devices which the first device 100 desires to form part of the ad-hoc network) can successfully receive the transmitted signal.

The minimum power level, Pₘᵢₙ, can be determined in a manner similar to the determination of the maximum power level, Pₘₐₓ, as described above. The skilled person will recognise that, if the transmission power level of a signal is gradually decreased, there will not in general be a clear power level at which the communications are not received by a receiving device. Rather, a reduction in the reliability of the reception of the transmitted signal will normally be observed. Accordingly, the skilled person will recognise that the value of Pₘᵢₙ can be defined in terms of a transmission power level at which communications between the first device 100 and the second device 110 are reduced to a given level of reliability.

The skilled person will recognise that the particular modulation profile used here is not critical. Accordingly, whilst the embodiment is described using a sinusoidal profile, equally a square wave, saw-tooth or other profiles could alternatively be used.

The skilled person also will recognise that information other than identification can also be conveyed by modulating the transmission power level in this manner. For example, the identity of a user of the first device, or the status of the first device could alternatively or additionally be conveyed.

In a complementary embodiment, the modulation profile selected can be used to signify the nature of the information exchange that is intended. Thus, for example, if the first device 100 intended to transmit information related to contact details, the modulation profile could be sinusoidal. Conversely, if the first device intended to transmit a photograph, then a saw-tooth profile could be selected. Such an embodiment has an advantage in that the second device 110 can immediately know the type of information that it will receive, and can be configured accordingly. This can reduce the time taken to complete the information transfer and subsequent handling of the received information.

For greater security, any of the above-described embodiments can utilise one or more passwords. The term password as used herein is intended to be interpreted broadly to encompass any form of information that has some degree of secrecy attached to it. Thus, in addition to text-based passwords, gestures or patterns for input on a touch screen or via a camera, spoken passwords, orientations or motions applied to the first device 100 and other forms of input into a device are also envisaged.

In embodiments in which the SSID of the first device 100 is used to differentiate the first device 100 from other available devices 103, 113, data which the second device 110 can use to generate a password for secure communications with the first device 100 are contained within the SSID. Thus, a first part of the SSID is used to differentiate the first device 100 as described above, while a second part of the SSID contains information which can be used to generate the password.

Typically, the password for secure communications will not be directly transmitted by the first device 100. Rather, "password information" which the second device 110 can use to generate the password will actually be transmitted. Thus, on receipt of the password information, the second device 110 will interpret the password information to thereby arrive at the required password for secure communications with the first device 100. The password information can, for example, contain information which can be used to generate the public key for enabling encrypted communications with the first device 100 under the 802.11 WPA2 standard. The skilled person will understand how to establish encrypted communications using the public key information, and so a further explanation will be omitted here. The skilled person will also recognise that the encryption used could equally be WEP or WPA or any other standard for encrypted communications.

Thus, for example, upon selection of the short-range mode, the SSID can be altered to "APP_1_SECURITY_3_pword". Here, the text string "pword" appended to the end of the SSID can be used to convey the password information that can be used to generate a password. This can be conveyed either in plain text, or using some form of encryption. Upon receipt of the SSID, the second device 110 can both identify the SSID as described previously, and also use the password information to establish encrypted communications with the first device 100.

Since the communications between the first device 100 and the second device 110 are, in this embodiment, encrypted, once the password information has been exchanged there is no on-going need for the transmission power level from either the first or second devices to remain limited. Accordingly, optionally, after exchange of the password information, the first device increases the transmission power level to a normal level. The skilled person will recognise that operation at a reduced transmission power level will tend to result is less reliable communications with a greater error rate, since the signal to noise ratio will be low. Accordingly, by increasing the transmission power level after exchange of the password information, the communications between the first device 100 and second device 110 can be made more reliable with a lower error rate.

In embodiments where the information that identifies the first device 100 is contained within the beacon message, the password information can also be included within the beacon message. The password information can, for example, contain the public key for enabling encrypted communications with the first device 100 under the 802.11 WPA2 standard. Thus, such embodiments can also operate using encrypted communications, and can also employ higher transmission power levels after exchange of the password information.

In embodiments where the information that identifies the first device 100 is conveyed by use of a modulation applied to the transmission power level from the first device 100, the password information can also be encoded within the modulation applied. The password information can, for example, be transmitted in the form of data packets during a period when the modulation is applied to the transmission power level. Alternatively, the password information can be encoded via changes to the amplitude of the frequency of the modulation, or even to the waveform used. The skilled person will understand methods of encoding information using such modulation, and so a further explanation will not be included here.

By encoding the password information into the modulated transmission signal the embodiment provides an additional advantage in that password information can be transmitted with an enhanced level of security. Figure 4 illustrates the transmission of password information during a period when a modulation is applied to the transmission power level from the first device 100. As illustrated, the transmission power level is modulated in a sinusoidal manner between a maximum transmission power of Pₘₐₓ and a minimum transmission power Pₘᵢₙ with a period of modulation of 1/f. In figure 4, the password information is transmitted starting from a time to and ending at a time t₁. As can be seen from the Figure, this period of time spans two complete periods of the sinusoidal modulation applied to the transmission power level.

The skilled person will recognise that the portions of the password information, 117, 119 that are transmitted during the times when the transmission power level is at a minimum will be more difficult for an eavesdropper 103 to detect than the portions 121, 123, 125 that are transmitted during the times when the transmission power level is maximum. Thus, to provide more reliable communications between the first device 100 and the second device 110, the average transmission power level in this embodiment can be raised in comparison to the embodiment described in relation to Figure 3. This is because the minima in the transmission power level will still ensure that an eavesdropper 103 will fail to receive at least the portions of the password information that are transmitted during these minima even if the transmission power level at other time is sufficient to be received by an eavesdropper 103.

Thus, as indicated in Figure 4, in this embodiment, the modulated transmission power level can have a maximum, Pₘₐₓ which is above a power level, P₁, at which the eavesdropper 103 can receive the signal. So long as the minimum transmission power level, Pₘᵢₙ, is below the level, P₁, at which the eavesdropper 103 can receive the signal, then it can be assured that the eavesdropper will not receive at least part of the password information.

In embodiments where the first device 100 identifies itself to the second device 110 by altering the channel on which it broadcasts in a predetermined pattern, the password information can be transmitted during the period when the transmission channel is being changed in the predetermined pattern.

For example, in a broadcast system in which 13 channels are used, labelled Ch1 to Ch13, the first channel, Ch 1 and the last channel Ch13 can be used to indicate a start or end of a sequence. The remaining channels can be used to convey the information required for identification of the first device 100 and identification of the password. Thus, for example, the first device 100 could broadcast on the following sequence of channels Ch1, Ch 1, Ch5, Ch13, Ch13 to indicate that it is available for setting up an ad-hoc network as described above.

Subsequently, the first device can broadcast in a sequence of channels that indicates the password information. This sequence could be Ch3, Ch11, Ch5, Ch6, Ch7. This information could then be translated as the password being 3 11 5 6 7. Optionally, the first device 100 can also broadcast in a sequence to indicate that the password information has ended. Thus, for example, the first device could broadcast in the sequence Ch1, Ch13, Ch1, Ch13. As described above the channels 1 and 13 can be used to indicated start and end of information tags. Thus, the sequence 1 13 1 13 is, in this example, used to indicate that all of the password information has been transmitted.

In all of the above described embodiments, the security of the communications can optionally be enhanced by the additional application of a human password. In such embodiments, the human password comprises information which the user of the second device must possess in order to establish, and to encrypt, communications with the first device 100. Thus, the combination of the human password together with the password information transmitted by the first device in any of the described embodiments can, for example, comprise information corresponding to the public key for encrypted communications with the first device 100 using the WEP, WPA or WPA2 protocols.

The human password can for example, comprise a text string that must be input into the second device 110, a gesture that must be performed on a touch screen of the second device, a spoken password or a particular physical manipulation of the second device such as a given spatial orientation. The term text-string is used here to include the use of digits and any other character that can, for example, be generated on a keypad.

Typically, the human password will be exchanged between the user of the first device 100 and the user of the second device 110 prior to, or during set-up of the ad-hoc network. Thus, the human password enhances the security of the communications since it is more difficult for an eavesdropper who is further from the first device 100 than the user of the second device 110 to overhear or otherwise obtain the human password. In such embodiments, communications between the first device 100 and the second device 110 can be established once the second device 110 has both identified the SSID of the first device 100 by one of the above described methods and also received the password information and once the user of the second device 110 has input the human password into the second device 110.

In alternative embodiments, the password information consists of only a human password. Thus, in such embodiments, once the second device 110 has identified the SSID of the first device 100 by one of the above described methods, encrypted communications can be established by the user of the second device 110 inputting the human password. Thus, in these embodiments, the human password can, for example, comprise information corresponding to the public key for encrypted communications with the first device 100 using the WEP, WPA or WPA2 protocols.

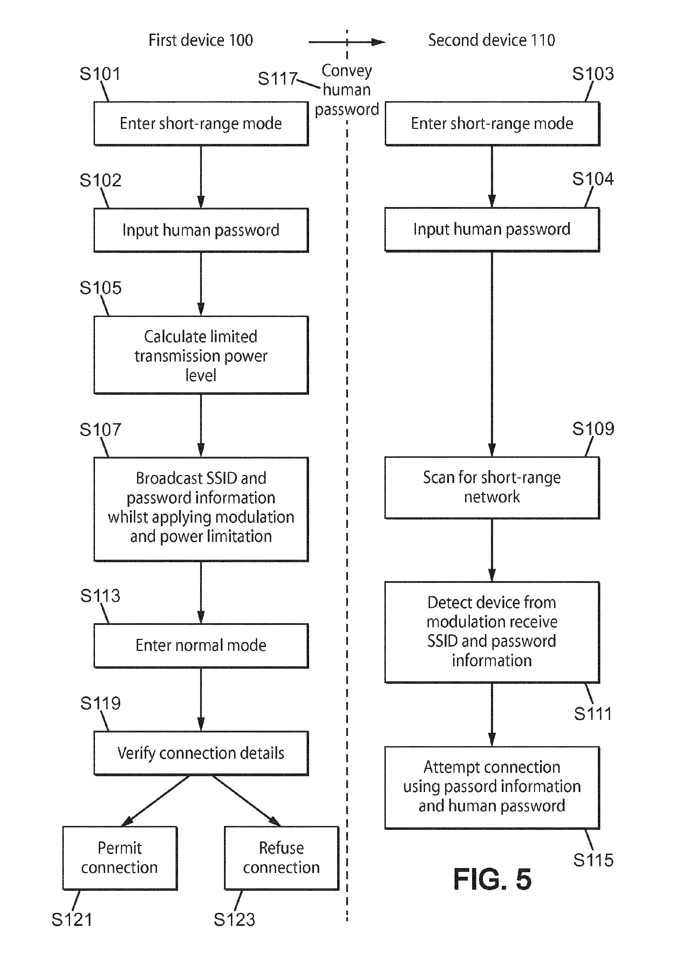

Figure 5 illustrates a flow chart for implementing an example embodiment. In the example embodiment, a method of transmission power level modulation is employed to identify the SSID of the first device and to transmit password information, while a human password is also employed for improved security.

In Figure 5, it is assumed that the users of the first device 100 and the second device 110 have agreed to connect using a short-range network. This agreement can, for example, be made verbally. Accordingly, the user of the first device 100 supplies S117 the user of the second device with a human password, which in this embodiment comprises a text string. The skilled person will recognise that the point in time at which the human password is exchanged is not relevant for the function of this embodiment.

In Figure 5, device 1 corresponds to the first device 100, which is the device that initiates the formation of the ad-hoc network, and therefore acts as the access point. In step S101, the first device 100 enters a short-range mode upon selection of the mode by a user of the first device 100. In step S102, the user of the first device 100 inputs the human password into the first device. The skilled person will recognise that step S102 can have been accomplished at any time in the past. Moreover, such a password can be preconfigured within the first device 100, thus this step can effectively be omitted.

In step S103, device 2, which corresponds to the second device 110, also enters a short-range mode, again upon selection of such by a user of the second device 110. At this point, the second device 110 prompts the user for the human password. Thus, in step S104, the user of the second device 110 inputs the human password into the second device.

In step S105, the first device 100 determines the required transmission power level for the short range mode. In this embodiment, this determination is made simply by adopting an average transmission power level that permits reliable communications at a maximum range of approximately 3m. This power level is stored in a memory of the first device.

In step S107, the first device 100 enters a mode in which it becomes an access point in accordance with an IEEE 802.11 standard. Thus, the first device 100 broadcasts its SSID and a password whilst applying a modulation to the transmission power level. As discussed in relation to Figures 3 and 4, this modulation is sinusoidal in profile with a frequency f. The average transmission power level is as determined in step S105.

During the period when the first device 100 is broadcasting its SSID as described in relation to step S107, in step S109, the second device 110 scans for devices that are broadcasting with a sinusoidal modulation of frequency f applied to the transmission power level. Since the first device 100 is broadcasting with such a modulation applied to the transmission power level, the second device can determine that this is the device with which the user of the second device 110 would like to connect. In step S111, the second device 110 receives the SSID and the password information that the first device 100 is broadcasting. In general, the modulation will be applied to the transmission power level for a number of reputations of the modulation function, and the password information will be transmitted a number of times. This is to give the second device 110 more than one opportunity to receive the required information.

After a predetermined time, in step S113, the first device 100 ceases to apply the modulation to the transmission power level or to broadcast the password information. Thus, the first device commences to operate as an access point in a standard, known, manner. At this point, the first device 100 also ceases to limit its transmission power level.

In step S115, the second device 110 then attempts to connect to the first device 100 using the combination of the password received in step S111 and the human password received in step S117. The skilled person will recognise that this step can be carried out during step S107, or during step S113. In other words, the second device 110 can attempt to connect to the first device 100 either after the modulation has ceased to be applied or during the period when the modulation is being applied.

In step S119, the first device 100 verifies whether the password supplied by the second device 110, which the second device 110 generated from the combination of the password information and the human password supplied, is correct. If soothe password is correct, then in step S121 the first device 100 permits connection of the second device 110 to the ad-hoc network provided by the first device 110 in a standard, known, manner. The communications transmitted and received in the course of using the ad-hoc network by both the first 100 and second 110 devices are both encrypted and decrypted using the password generated from the combination of the password information and the human password. If the connection credentials supplied by the second device 110 are not correct, then the attempted connection is refused in step S123.

The skilled person will recognise that, whist the embodiments have been described in terms of the connection of two devices in an ad-hoc network, the network can equally comprise more than two devices.

As hereinbefore described, in alternative embodiments various elements of the method described in relation to figure 5 can be either omitted or exchanged for the alternatives described. Thus, for example, in alternative embodiments, the requirement for a human password can be omitted. Conversely, in other embodiments, only a human password is used, and therefore no password need be transmitted during modulation of the transmission power level.

In further alternative embodiments, no password is employed. Thus, in such embodiments, restriction to access is provided solely by limiting the transmission power of the first device 100.

In further alternative embodiments, the communications between devices can be established in an unsecured manner. Thus, no passwords are employed, and no limitation is applied to the transmission power level. In such embodiments, the first device 100 simply signals to all devices within range that it is available for connection via an ad-hoc network by applying one of the described methods to signal its SSID. In other words, the first device 100 simply modulates the transmission power level, changes its SSID in a known manner, inserts information into the beacon message or changes broadcast channel in a predetermined pattern. The second device 110 can then connect to the first device 100 in an unsecured manner by use of the first device's SSID. Such embodiments therefore provide a very simple and quick means for establishing an ad-hoc network.

In alternative embodiments, rather than a text string, the human password takes the form of a spoken password, a gesture or pattern input via a touch screen or a camera or an orientation or rotation applied to the first device 100.

In further alternative embodiments, and as described earlier, rather than employing a modulation to the transmission power level, the identity of the first device can be signalled instead by changing the SSID to a predetermined identity, transmitting identifying information in the beacon message, or changing the broadcast channel of the first device 100 in a known manner.

In further alternative embodiments, and as described earlier, the password information is transmitted by means of changing the SSID, transmitting password information in the beacon message, or during changing the broadcast channel of the first device 100 in a known manner.

In further alternative embodiments, and as described earlier, the step of limiting transmission power level of the first device is omitted.

In further alternative embodiments, the transmission power of the first device is not limited, and thus step S105 is omitted. Thus, in such embodiments, restriction to access is provided solely by the human password supplied by the user of the first device 100.

A person skilled in the art will also readily appreciate that various parameters disclosed in the description may be modified and that various embodiments disclosed may be combined without departing from the scope of the invention.

As mentioned above, embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

## Claims

1. A method of providing wireless communication access to a first device, the method comprising:
determining a limited transmission power level for the first device on the basis of a desired range limit for wireless communications,
configuring the first device to broadcast wireless information at the limited power level, and
broadcasting, from the first device, connection information for establishing wireless communications with the first device.

2. A method according to claim 1, further comprising configuring the first device to broadcast at a second transmission power level, higher than the limited transmission power level after broadcast of the connection information is complete.

3. A method according to claim 1 or 2, wherein the limited power level is an average power level, and further comprising applying a modulation to the transmission power level whilst broadcasting the connection information to thereby provide means of identifying the first device to a second device.

4. A method according to claim 3, wherein the applied modulation takes the form of a sinusoidal, triangular, square-wave or saw-tooth function.

5. A method according to any preceding claim, wherein, during broadcast of the connection information, the first device applies at least one of;
a change to its service set identifier, SSID,
an insertion of a specific information within a beacon message,
a change to its broadcast channel in a predetermined pattern,
to thereby provide means of identifying the first device to a second device.

6. A method according to any preceding claim, wherein the connection information comprises information indicating a password for encrypted communications with the first device.

7. A method according to any preceding claim, wherein establishing the wireless communications is initiated via a user input to the first device.

8. A method according to claim 7, wherein the user input comprises information corresponding to a password for establishing encrypted wireless communications with the first device.

9. A method according to claim 8 when dependent on claim 6, wherein the first device is configured to permit wireless communications with a second device only after receipt from the second device of information corresponding to both the password information from the user input and also the password information from the connection information.

10. A method according to claims 8 or 9 wherein the information corresponding to a password comprises one or more of:
a text string,
a speech input,
a gesture input via a touch screen or camera,
a rotation to the first device, or
an orientation of the first device.

11. A first device for communicating wirelessly with another device, the first device comprising
a wireless communications module configured to:
determine a limited transmission power level for the first device on the basis of a desired range limit for wireless communications,
configure the first device to broadcast wireless information at the limited power level, and
broadcast, from the first device, connection information for establishing wireless communications with the first device.

12. A computer program product comprising computer readable instructions which, when run on a computer system, cause the computer system to perform the method of any of claims 1 to 10.

13. A computer readable medium comprising the computer program product according to claim 12.
